# EUROPÄISCHE PATENTANMELDUNG

(11) **EP 3 168 592 A1**
(43) Veröffentlichungstag der Anmeldung: **17.05.2017**
(21) Anmeldenummer: 15194237.2
(22) Anmeldetag: 12.11.2015
(51) Int. Cl.: G01M 17/013

(54) **RADPRÜFEINRICHTUNG UND VERFAHREN ZUM BETREIBEN DERSELBEN**

(71) Anmelder: Hug, Joachim, 38678 Clausthal-Zellerfeld (DE); Henze, Sven, 38678 Clausthal-Zellerfeld (DE)
(72) Erfinder: Hug, Joachim, 38678 Clausthal-Zellerfeld (DE); Henze, Sven, 38678 Clausthal-Zellerfeld (DE)
(74) Vertreter: REHBERG HÜPPE + PARTNER

(57) **Zusammenfassung**

Die Erfindung betrifft eine Radprüfeinrichtung (1) für ein Rad (10) eines Kraftfahrzeugs. Bei Radprüfeinrichtung (1) wird an einem Prüftisch (8) das Rad (10) befestigt. Mittels eines Prüfaktuators (91), insbesondere eines Unwuchterregers (90), wird eine dynamische Prüfbeanspruchung des Rads (10) erzeugt. Die Radprüfeinrichtung (1) verfügt über eine Handhabungseinrichtung (24), über welche ein Zuführen des Rads (10) zu und/oder ein Entfernen des Rads (10) von dem Prüftisch (8) möglich ist. Über einen Messsensor wird die Prüfbeanspruchung des Rads (10) erfasst.

Erfindungsgemäß ist in der Handhabungseinrichtung (24) ein Kalibrieraktuator vorhanden, welcher eine Kalibrierbeanspruchung des Rads (10) erzeugt. Eine Steuereinrichtung steuert über den Kalibrieraktuator eine Kalibrierbeanspruchung bekannter Größe aus, welche von dem Messsensor erfasst wird. Hierdurch kann eine Kalibrierung des Messsensors erfolgen. Erfindungsgemäß ist somit die Handhabungseinrichtung (24) multifunktional eingesetzt.

## Beschreibung

### TECHNISCHES GEBIET DER ERFINDUNG

Die Erfindung betrifft eine Radprüfeinrichtung, mittels welcher eine dynamische Prüfung eines (Fahrzeug-) Rads eines Kraftfahrzeugs durch Beaufschlagung derselben mit einer dynamischen Prüfbeanspruchung möglich ist. Vorzugsweise handelt es sich bei der Prüfbeanspruchung um eine Beanspruchung des Rads mit einem Biegemoment um eine Biegeachse, welche vertikal zur Längsachse des Rads bzw. Rotationsachse des Rads bei deren Nutzung in einem Kraftfahrzeug orientiert ist, wobei während der Prüfung des Rads die Orientierung der Biegeachse um die Längsachse des Rads umläuft. Des Weiteren betrifft die Erfindung ein Verfahren zum Betreiben einer Radprüfeinrichtung.

### STAND DER TECHNIK

Im Fahrbetrieb eines Kraftfahrzeugs sind Fahrzeugräder des Kraftfahrzeugs komplexen Beanspruchungen ausgesetzt. So führt bspw. eine im Umfangsrichtung des Rads orientierte Reibkraft zwischen dem auf der Felge angeordneten Reifen und der Fahrbahn zu einer Torsionsbeanspruchung des Rads um die Längs- und Rotationsachse des Rads beim Beschleunigen und Abbremsen des Kraftfahrzeugs. Die vertikal orientierte Aufstandskraft des Reifens auf dem Untergrund führt zu einer radial zur Längsachse des Rads wirkenden Beanspruchung (und bei einem etwaigen Versatz zwischen dem Aufstandpunkt und dem Flansch der Felge auch zu einem wirkenden Biegemoment). Schließlich führt eine im Aufstandspunkt des Reifens auf der Fahrbahn infolge der Reibung wirkende Seitenführungsbeanspruchung zu einer Beaufschlagung des Rads mit einem Biegemoment, welches um eine Biegeachse orientiert ist, die quer zur Längsachse des Rads orientiert ist und durch den Aufstandspunkt des Reifens auf die Fahrbahn verläuft. Infolge der wälzenden Bewegung des Reifens mit Felge auf der Fahrbahn laufen die genannten Beanspruchungen um die Längsachse des Rads um.

Radprüfeinrichtungen für eine Simulation der vorgenannten Beanspruchungen durch eine Prüfbeanspruchung sind bspw. aus den Druckschriften DE 24 06 602 A1**,** DE 10 2012 112 250 A1 und DE 10 2013 206 470 A1 bekannt.

Radprüfeinrichtungen, mittels welchen das Rad mit einer Prüfbeanspruchung in Form eines umlaufenden Biegemoments beansprucht werden kann, besitzen Prüfaktuatoren, mittels welchen die Erzeugung der dynamischen Prüfbeanspruchung des Rads erfolgt, welche als Unwuchterreger ausgebildet sein können.

Die Druckschrift DE 10 00 168 A1 offenbart eine Radprüfeinrichtung, bei welcher eine endseitig mit einem Flansch ausgestattete Hohlwelle um ihre horizontal orientierte Längsachse drehbar gelagert ist. Zwischen dem Flansch und einem Klemmring ist ein Felgenhorn einer Felge, deren Längsachse ebenfalls horizontal orientiert ist, fest einspannbar. Koaxial durch die Hohlwelle erstreckt sich eine Lastwelle. In einem Endbereich ist die Lastwelle drehfest an eine in die Felge eingezogene Radscheibe angeflanscht. An den anderen Endbereich der Lastwelle, welche aus der Hohlwelle auskragt, ist pendelnd eine Unwuchtmasse angehängt. Über einen Antrieb werden die Hohlwelle mit Flansch, die Felge, die Radscheibe und die Lastwelle in Rotation versetzt, während die pendelnd aufgehängte Unwuchtmasse mit der Lastwelle nicht mitbewegt wird, sondern weitestgehend die Gleichgewichtslage des Pendels beibehält, womit auf die Felge eine umlaufende Biegebeanspruchung ausgeübt wird, welche sich aus dem Produkt der Unwuchtmasse und dem Hebelarm derselben, welcher durch die Länge der Lastwelle vorgegeben ist, ergibt.

Im Gegensatz hierzu ist gemäß der Druckschrift DE 28 27 728 C2 eine Felge mit vertikal orientierter Längsachse fest eingespannt. Eine Lastwelle ist über einen Nabenflansch dem von der Radschüssel ausgebildeten Flansch verbunden. Von der Felge erstreckt sich die Lastwelle nach unten. Eine Unwuchtmasse ist zur Rotation in einer horizontalen Ebene drehbar gegenüber dem freien unteren Endbereich der Lastwelle gelagert. Der Antrieb der Unwuchtmasse erfolgt über einen auf dem Boden stehenden Motor über eine biegeweiche Antriebswelle. Das Einspannen der Felge an einem Prüfgestell erfolgt durch radiales Anpressen von mehreren über den Umfang der Felge verteilten Spannelementen an Schulterflächen des Felgenbetts, wobei für die Erzeugung der Anpresskraft jedes Spannelement mit einem Hydropulser gekoppelt ist.

Die Durchschrift DE 33 21 827 C1 offenbart eine Radprüfeinrichtung mit grundsätzlich entsprechender Erzeugung der Biegebeanspruchung, wobei hier das Einspannen der Felge an dem Prüfgestell über mit dem Prüfgestell verschraubte, über den Umfang verteilte Spannwinkel erfolgt.

Die Druckschrift DE 41 11 265 C2 beschreibt die Problematik, dass bei der Beanspruchung einer Felge mit einer umlaufenden Biegebeanspruchung, wie dies bspw. mit den Radprüfeinrichtungen gemäß dem oben angeführten Stand der Technik erfolgt, die Felge über den gesamten Durchmesser mit der Biegebeanspruchung beaufschlagt ist, also auch in der Quer-Halbebene der Felge, welche im Fahrbetrieb des Kraftfahrzeugs oberhalb der Achse angeordnet ist. Tatsächlich wirkt aber im Fahrbetrieb die Biegebeanspruchung ausschließlich oder vorrangig in dem Bereich der Felge, welcher zwischen der Achse und dem Aufstandspunkt des Reifens auf der Fahrbahn angeordnet ist. Die Druckschrift DE 41 11 265 C2 schlägt eine modifizierte Abstützung und Beaufschlagung der Felge in einer Radprüfeinrichtung vor, bei welcher tatsächlich lediglich die während des Fahrbetriebs wirkende Biegebeanspruchung auf die Felge aufgebracht wird.

DE 35 17 595 A1 offenbart eine Handhabungseinrichtung, mittels welcher Felgen automatisiert einer Radprüfeinrichtung, hier für eine Qualitätskontrolle der Felgen insbesondere hinsichtlich der Felgenrundheit, zugeführt werden. Diese Handhabungseinrichtung weist eine Verschiebeeinrichtung auf, mittels welcher Felgen sukzessive einer Messstelle zugeführt werden. Im Bereich der Messstelle erfolgt ein Zentrieren, Anheben und Drehen der Räder sowie ein Aufbringen einer Markierung mittels einer Prägeeinrichtung. Hinter der Messstelle erfolgt ein Entladen der Felge mittels einer Kippeinrichtung.

### AUFGABE DER ERFINDUNG

Der Erfindung liegt die Aufgabe zugrunde, eine Radprüfeinrichtung (insbesondere für die dynamische Prüfbeanspruchung des Rads mit einer umlaufenden Biegebeanspruchung unter Nutzung eines Unwuchterregers) vorzuschlagen, welche hinsichtlich
- der Handhabung des Rads,
- der Befestigung des Rads an dem Prüftisch,
- des apparativen Aufwands,
- einer Kalibrierung eines Messsensors zur Erfassung der Prüfbeanspruchung,
- einer Sichtprüfung des Rads auch während der Beaufschlagung des Rads mit der dynamischen Prüfbeanspruchung und/oder
- der Nutzung der Radprüfeinrichtung für Fahrzeugräder oder Felgen unterschiedlicher Bauart und/oder Größe
verbessert ist. Des Weiteren liegt der Erfindung die Aufgabe zugrunde, ein entsprechend verbessertes Verfahren zum Betreiben einer Radprüfeinrichtung vorzuschlagen

### LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

### BESCHREIBUNG DER ERFINDUNG

Erfindungsgemäß verfügt die Radprüfeinrichtung über einen Prüftisch, welcher grundsätzlich beliebig ausgebildet sein kann (bspw. auch gemäß den Prüfgestellen des eingangs erläuterten Stands der Technik), solange an diesem ein Rad, insbesondere eine Felge, befestigt werden kann. In der Radprüfeinrichtung findet ein Prüfaktuator Einsatz, mittels dessen eine dynamische Prüfbeanspruchung des Rads möglich ist. Während grundsätzlich ein Prüfaktuator beliebiger Bauart und Anbindung im Rahmen der erfindungsgemäßen Radprüfeinrichtung Einsatz finden kann, handelt es sich hier vorzugsweise um einen Unwuchterreger und/oder einen Prüfaktuator, mittels dessen eine umlaufende Biegebeanspruchung des Rads um eine Biegeachse, die quer zur Längsachse des Rads orientiert ist, erzeugt werden kann. Des Weiteren findet in der erfindungsgemäßen Radprüfeinrichtung eine Handhabungseinrichtung Einsatz, mittels welcher ein Zuführen und/oder Entfernen des Rads von dem Prüftisch erfolgen kann. Mittels dieser Handhabungseinrichtung kann dem Benutzer das Zuführen und Entfernen des Rads durch eine geeignete Unterstützung und/oder Führung vereinfacht werden. Die erfindungsgemäße Radprüfeinrichtung verfügt auch über einen Messsensor, über welchen eine Erfassung der Prüfbeanspruchung des Rads erfolgen kann. Dies kann zu unterschiedlichen Zwecken erfolgen, bspw. für
- eine Dokumentation der Durchführung der Prüfung,
- eine Steuerung (worunter im Folgenden auch eine Regelung subsummiert wird) des Prüfaktuators,
- eine Erkennung eines Abbruchkriteriums bei einer fehlerhaften Durchführung der Prüfung und/oder einem bevorstehenden oder bereits erfolgten Versagen des Rads und/oder
- eine Überwachung der Einhaltung vorgegebener Prüfbedingungen,
um nur einige nicht beschränkende Beispiele zu nennen.

Erfindungsgemäß wird vorgeschlagen, dass die in der Radprüfeinrichtung eingesetzte Handhabungseinrichtung multifunktional ausgebildet ist: Neben dem Zuführen und/oder Entfernen des Rads wird die Handhabungseinrichtung auch verwendet, um den Messsensor, welcher die Prüfbeanspruchung erfassen soll, zu kalibrieren. Zu diesem Zweck ist die Handhabungseinrichtung mit einem Kalibrieraktuator ausgestattet, welcher eine Kalibrierbeanspruchung des Rads erzeugen kann. Beispielsweise kann der Kalibrieraktuator ein Beanspruchungselement betätigen, welches gegenüber einer Befestigungseinheit der Handhabungseinrichtung ausgefahren wird und dann mit einer von dem Kalibrieraktuator erzeugten Kalibrierkraft gegen eine mit dem Rad fest verbundene Lastwelle gepresst wird, um die Kalibrierbeanspruchung zu erzeugen. Alternativ möglich ist, dass die Handhabungseinrichtung über einen Kalibriersensor verfügt, mittels dessen eine anderweitig aufgebrachte Kalibrierbeanspruchung mit einem Kalibrier-Messsignal gemessen werden kann. Die Erfindung umfasst aber auch Ausführungsformen, bei welche die Handhabungseinrichtung sowohl über einen die Kalibrierbeanspruchung erzeugenden Kalibrieraktuator als auch über einen Kalibriersensor, über welchen die erzeugte Kalibrierbeanspruchung mit dem Kalibrier-Messsignal gemessen wird, verfügt. Möglich ist in diesem Rahmen sogar, dass über die durch den Kalibriersensor gemessene Kalibrierbeanspruchung eine Regelung des Kalibrieraktuators derart erfolgt, dass sich eine vorbestimmte Kalibrierbeanspruchung des Rads ergibt.

Des Weiteren ist die erfindungsgemäße Radprüfeinrichtung mit einer Steuereinrichtung ausgestattet, welche als eine Steuereinheit ausgebildet sein kann oder auch mit verteilten Steuereinheiten gebildet sein kann. Mittels der Steuereinrichtung erfolgt dann eine Kalibrierung des Messsensors, was insbesondere mit der Ermittlung
- eines geeigneten Kalibrierfaktors,
- einer Kalibrierkurve,
- einer Kalibrierabhängigkeit,
- eines kalibrierendes Kennfeld des Messsensors
   erfolgen kann, welche, welcher oder welches dann auch flüchtig oder permanent gespeichert werden kann.

Im Rahmen der Erfindung berücksichtigt die Steuereinrichtung für die Kalibrierung des Sensors einerseits ein Messsignal des Messsensors infolge der wirkenden Kalibrierbeanspruchung. Die weitere für die Kalibrierung des Messsensors erforderliche Größe, nämlich der Betrag der Kalibrierbeanspruchung, wird für eine Variante der Erfindung auf Grundlage des Kalibrier-Messsignals des Kalibriersensors ermittelt. Für eine andere Variante steuert die Steuereinrichtung den Kalibrieraktuator so an, dass eine vorbestimmte, in der Steuereinrichtung bekannte Kalibrierbeanspruchung erfolgt. Durch Vergleich der vorbestimmten Kalibrierbeanspruchung (welche auch aus dem Ansteuersignal für den Kalibrieraktuator abgeleitet sein kann) oder des Kalibrier-Messsignals des Kalibriersensors mit dem Messsignal des Messsensors kann dann ein geeigneter Kalibrierfaktor, eine Kalibrierkurve, eine Kalibrierabhängigkeit oder ein Kennfeld erzeugt werden, wobei auch für unterschiedliche Kalibrierbeanspruchungen eine weitere Abhängigkeit eines Kalibrierfaktors des Messsensors von der wirkenden Kalibrierbeanspruchung erfasst werden kann. Die Kalibrierung erfolgt hierbei derart, dass mit dem Kalibrierfaktor, der Kalibrierkurve, der Kalibrierabhängigkeit oder dem Kennfeld eine Ermittlung der tatsächlich und unabhängig von einer Kalibrierbeanspruchung erzeugten Prüfbeanspruchung aus dem Messsignals des Messsensors möglich ist. Die Steuereinrichtung kann hierbei die erforderliche Steuerlogik beinhalten, welche
- die Ansteuerung des Kalibrieraktuators ermöglicht,
- die Verarbeitung des Messsignals des Messsensors und des Kalibrier-Messsignals des Kalibriersensors ermöglicht,
- die Ermittlung des Kalibrierfaktors, der Kalibrierkurve, der Kalibrierabhängigkeit oder des Kennfeldes ermöglicht und/oder
- im Prüfbetrieb die Ermittlung der Kalibrierbeanspruchung unter Nutzung des Messsignals des Messsensors und des Kalibrierfaktors, der Kalibrierkurve, der Kalibrierabhängigkeit oder des Kennfeldes ermöglicht.

Gemäß einer weiteren Ausgestaltung der Erfindung berücksichtigt die Steuereinrichtung (neben der von der Steuereinrichtung ausgesteuerten Kalibrierbeanspruchung oder dem Kalibrier-Messsignal des Kalibriersensors einerseits und dem Messsignal des Messsensors infolge der Kalibrierbeanspruchung andererseits) auch eine Umrechnungsvorschrift. Eine derartige Umrechnungsvorschrift wäre nicht erforderlich, wenn ein Kalibrieraktuator unmittelbar auf den Messort des Messsensors einwirken würde, da in diesem Fall die von dem Kalibrieraktuator erzeugte Kalibrierbeanspruchung unmittelbar auf den Messsensor wirken würde. Wirkt aber der Kalibrieraktuator räumlich beabstandet von dem Messort des Messsensors (oder ist der Kalibriersensor zur Messung der Kalibrierbeanspruchung des Rads räumlich beabstandet von dem Messort des Messsensors angeordnet), so ist die von dem Kalibrieraktuator erzeugte oder dem Kalibriersensor gemessene Beanspruchung umzurechnen in die an dem Messort des Messsensors wirkende Beanspruchung, was erfindungsgemäß durch die Umrechnungsvorschrift erfolgen kann. Hierbei kann die Umrechnungsvorschrift a priori in der Steuereinrichtung, insbesondere einem permanenten Speicher, abgelegt sein. Um lediglich einige Beispiele zu nennen, kann die Umrechnungsvorschrift von der Geometrie des Rads oder der Felge und/oder der Geometrie der zwischen das Rad und den Kalibrieraktuator und/oder den Kalibriersensor im Kraftfluss zwischengeordneten Bauelemente abhängig sein.

Dies wird beispielhaft für den Einsatz eines Unwuchterregers mit einer Lastwelle und einer Handhabungseinrichtung, welche an der Lastwelle angreift, erläutert: Erzeugt der Kalibrieraktuator der Handhabungseinrichtung eine Querkraft auf die Lastwelle, hängt die auf das Rad wirkende Biegebeanspruchung ab von der axialen Erstreckung der Lastwelle zwischen dem Angriffspunkt der Handhabungseinrichtung und damit der Wirkachse des Kalibrieraktuators und des Rads. Somit kann die Umrechnungsvorschrift die vorgenannte Erstreckung berücksichtigen. Das in dem Rad wirkende Biegemoment nimmt u. U. von einem Kopplungsbereich mit einer etwaigen Lastwelle radial nach außen ab. Je nach Formgebung der Radschüssel kann aber der Kopplungsort zwischen Lastwelle und Rad in Richtung der Längsachse des Rads verlagert sein. Anders gesagt kann der Kopplungsbereich der Radschüssel gegenüber einem Einspannbereich der Felge des Rads an dem Prüftisch in Richtung der Längsachse des Rads verlagert sein, womit bei gleichem Ort der Wirklinie des Kalibrieraktuators (zumindest in dem Kopplungsbereich zwischen Radschüssel und Lastwelle) das wirkende Biegemoment verändert wird. Auch dieser von der Geometrie des zu prüfenden Rads abhängige Effekt kann in der Umrechnungsvorschrift berücksichtigt sein. Durchaus möglich ist, dass in der Steuereinrichtung unterschiedliche Umrechnungsvorschriften abgelegt sind, welche bspw. für unterschiedliche Prüfbedingungen oder für unterschiedliche Geometrien der zu prüfenden Fahrzeugräder oder Felgen gelten können und gezielt von einem Benutzer ausgewählt werden oder auch automatisch ausgewählt werden können. Die Umrechnungsvorschrift kann bspw. rechnerisch aus der Konstruktion und der gewählten Geometrie ermittelt werden. Möglich ist auch die empirische Ermittlung einer etwaigen Umrechnungsvorschrift. Schließlich ist auch möglich, dass durch weitere Versuche mit der Radprüfeinrichtung im Betrieb eine Umrechnungsvorschrift ermittelt und/oder adaptiert wird.

Grundsätzlich kann der Kalibrieraktuator und/oder kann der Kalibriersensor an beliebiger Stelle der Handhabungseinrichtung angeordnet sein, wobei eine Integration in ein Bauelement der Handhabungseinrichtung erfolgen kann, eine Anordnung zwischen zwei Bauelementen der Handhabungseinrichtung im Kraftfluss zwischen diesen erfolgen kann oder der Kalibrieraktuator und/oder der Kalibriersensor an ein Bauelement der Handhabungseinrichtung angesetzt sein können. Ein Kalibriersensor kann hierbei dem Kraftfluss von einem Kalibrieraktuator parallel geschaltet sein, so dass der Kalibriersensor lediglich eine Komponente der von dem Kalibrieraktuator erzeugten Kraft erfasst, oder der Kalibriersensor kann in Reihenschaltung in den Kraftfluss integriert sein, so dass die gesamte von dem Kalibrieraktuator erzeugte Kraft über den Kalibriersensor verläuft.

Für eine besondere Ausgestaltung der Erfindung ist/sind der Kalibrieraktuator und/oder der Kalibriersensor Bestandteil eines Tragarms der Handhabungseinrichtung. Für einen besonderen Vorschlag der Erfindung ist der Tragarm selbst zumindest in einem axialen Teilabschnitt von dem Kalibrieraktuator selbst gebildet.

Der Tragarm kann zum Tragen des Rads (mit zugeordneten Bauelementen der Radprüfeinrichtung wie beispielsweise einer Lastwelle, eines Unwuchterregers u. ä.) dienen und durch Bereitstellung des Kalibrieraktuators und/oder des Kalibriersensors multifunktional genutzt sein. Für eine weitere Ausgestaltung der Erfindung ist eine zusätzliche Funktion von dem Tragarm bereitgestellt: Für diese Ausführungsform stellt der Tragarm einen Schwenk-Freiheitsgrad der Handhabungseinrichtung um eine horizontale Achse bereit. Dieser zusätzliche Schwenk-Freiheitsgrad kann bspw. vorteilhaft für eine Verschwenkung des Rads mit zugeordneten Bauelementen der Radprüfeinrichtung während des Zuführens und/oder Entfernens des Rads von dem Prüftisch erfolgen, was bspw. von Vorteil ist, wenn das Rad in anderer Orientierung an dem Prüftisch befestigt werden muss als die Orientierung, in welcher das Rad zu der Radprüfeinrichtung transportiert wird und/oder diese hiervon weg transportiert wird.

In weiterer Ausgestaltung ist eine Kopplungseinrichtung vorhanden, welche der Kopplung des Prüfaktuators mit dem Rad dient. Diese Kopplungseinrichtung kann im Rahmen der Erfindung multifunktional genutzt werden, indem mit der Kopplungseinrichtung auch die Handhabungseinrichtung koppelbar ist. Hierbei ist möglich, dass die Kopplung mit der Handhabungseinrichtung für das Zuführen oder Entfernen des Rads genutzt wird und/oder für die Erzeugung der Prüfbeanspruchung des Rads durch den Kalibrieraktuator oder das Messen der Kalibrierbeanspruchung durch den Kalibriersensor genutzt wird.

Im Rahmen der Erfindung kann ein beliebiger Prüfaktuator genutzt werden. Um lediglich ein Beispiel zu nennen, kann der Prüfaktuator mit einem hydraulischen oder elektrischen Aktuator oder Shaker ausgebildet sein. Für eine besondere erfindungsgemäße Radprüfeinrichtung ist allerdings der Prüfaktuator als Unwuchterreger ausgebildet. In diesem Fall ist die vorgenannte Kopplungseinrichtung als Lastwelle ausgebildet und ein umlaufendes Biegemoment infolge der rotierenden Unwucht, welches als Prüfbeanspruchung auf das Rad wirkt, ist von der Längserstreckung der Lastwelle zwischen dem Unwuchterreger und dem Rad abhängig. Gegebenenfalls kann diese Längserstreckung dann über die oben genannte Umrechnungsvorschrift berücksichtigt sein.

Gemäß dem Stand der Technik liegt das Rad üblicherweise an einem Prüftisch von oben auf, während die Einrichtungen zur Erzeugung der Prüfbeanspruchung üblicherweise unterhalb des Rads in einer geeigneten Ausnehmung des Prüftisches angeordnet sind (vgl. bspw. DE 28 27 728 C2). Abweichend hierzu schlägt die Erfindung vor, dass bei Ausbildung des Prüfaktuators als Unwuchterreger der Unwuchterreger und die Lastwelle, welche den Unwuchterreger mit dem Rad koppelt, bei an dem Prüftisch gehaltenem Rad oberhalb des Rads angeordnet sind. Auf diese Weise ist die bauliche Integration des Unwuchterregers und der Lastwelle in eine hierfür bereitzustellende Ausnehmung des Prüftischs entbehrlich. Möglich ist auch, dass auf diese Weise der Unwuchterreger und die Lastwelle auf einfache Weise in radialer Richtung zugänglich sind, beispielsweise für die Montage und Demontage sowie eine Sichtprüfung auch während des Prüfbetriebs. Überraschend liegt dieser Ausgestaltung auch die Erkenntnis zugrunde, dass trotz der sich von dem Rad nach oben erstreckenden Lastwelle auch eine optische Begutachtung des Rads oder der Felge des Rads während der laufenden Prüfung möglich ist.

Eine weitere Ausgestaltung der Erfindung basiert auf der Erkenntnis, dass bei einer optischen Begutachtung des Rads oder der Felge vorrangig etwaige infolge der Prüfung entstehende Schäden auf der Innenseite des Rads oder der Felge festzustellen sind. In Umsetzung dieser Erkenntnis schlägt die Erfindung vor, dass in der Radprüfeinrichtung bei an dem Prüftisch gehaltener Felge die Innenseite der Felge nach oben weist, so dass die Innenseite der Felge und weitere Bauelemente des Rads während der Durchführung der Prüfung begutachtet werden kann.

Das Befestigen des Rads an dem Prüftisch kann grundsätzlich auf beliebige, aus dem Stand der Technik bekannte Weise erfolgen. Eine besondere Ausgestaltung der Erfindung schlägt vor, dass die Befestigung über eine Spanneinrichtung erfolgt, welche über mehrere Spannelemente verfügt. Die mehreren Spannelemente halten das Rad an der Felge an über den Umfang der Felge (vorzugsweise gleichmäßig) verteilten Orten an dem Prüftisch. Hierbei kann die Betätigung der Spannelemente einzeln erfolgen, bspw. durch sukzessive Betätigung von Spannschrauben der Spannelemente. Vorzugsweise sind im Rahmen der Erfindung die Spannelemente der Spanneinrichtung gemeinsam betätigbar. Beispielsweise können die Spannelemente jeweils einen hydraulischen Spannkolben besitzen, so dass über ein hydraulisches Leitungssystem die gleichzeitige hydraulische Beaufschlagung der Spannkolben mit gemeinsamer Betätigung der Spannelemente erfolgen kann.

Die Erfindung schlägt des Weiteren vor, dass die Spannelemente der Spanneinrichtung nicht hinsichtlich ihrer Position an dem Spanntisch fixiert sind. Vielmehr sind für diesen Vorschlag die Positionen der Spannelement der Spanneinrichtung einstellbar. Durch eine Einstellung der Position der Spannelemente wird ermöglicht, dass mit diesen Fahrzeugräder oder Felgen auch unterschiedlicher Abmessungen und/oder Durchmesser an dem Prüftisch gehalten werden können, ohne dass langwierige und aufwendige Umbaumaßnahmen getroffen werden müssen. Hier ist die separate Einstellung der einzelnen Positionen der Spannelemente durch den Benutzer möglich. Durchaus möglich ist aber auch eine gemeinsame Einstellung der Positionen sämtlicher Spannelemente. Ohne dass eine Einschränkung der Erfindung hierauf erfolgen soll, können bspw. die Spannelemente in radialen Führungsnuten des Spanntisches geführt sein, mittels Federn radial nach außen beaufschlagt sein und in dem radial außenliegenden Endbereichen mit Betätigungsstößeln an Betätigungsflächen eines die Spannelemente umgebenden Rings angepresst werden. Die Betätigungsflächen sind hierbei derart geneigt, dass mit einer relativen Verdrehung des Spannrings die Spannelemente gegen die Beaufschlagung der Feder radial nach innen gepresst werden. Somit kann mit einer Verdrehung des Spannrings eine gemeinsame Betätigung der Spannelemente erfolgen. Möglich ist alternativ auch eine gemeinsame Betätigung der Spannelemente über insbesondere elektrische Aktuatoren.

Insbesondere für die manuelle Verstellung der Spannelemente der Spanneinrichtung zwecks Anpassung an Fahrzeugräder oder Felgen unterschiedlicher Abmessungen und/oder Durchmesser ist es von Vorteil, wenn die Positionen der Spannelemente der Spanneinrichtung verrastbar oder verriegelbar sind. Hierbei kann eine Verrastung oder Verriegelung in einzelnen vorbestimmten Abständen erfolgen. Möglich ist auch, dass die durch die Verrastung oder Verriegelung vorgegebenen Rast- oder Verriegelungspositionen korrelieren mit unterschiedlichen Abmessungen und/oder Durchmesser unterschiedlicher Fahrzeugräder oder Felgen.

Grundsätzlich können beliebige Spannelemente Einsatz finden, wie diese auch aus dem Stand der Technik bekannt sind. Für eine Ausgestaltung der Erfindung sind die Spannelemente jeweils mit zwei Spannbacken ausgebildet. Die beiden Spannbacken sind in ihren Endbereichen, bspw. über einen geeignete Ausnehmungen der Spannbacken durchsetzenden Schwenkbolzen, über ein Schwenklager miteinander verbunden. Zwischen den Spannbacken ist unter Verringerung des Öffnungswinkels der Spannbacken eine Felge des Rads einspannbar, was vorzugsweise im Bereich eines Felgenhorns der Felge erfolgt. Hierbei kann eine Spannbacke fest gegenüber dem Prüftisch sein oder gegenüber diesem, insbesondere zur Gewährleistung der Einstellbarkeit für unterschiedliche Felgengeometrien, verschieblich in radialer Richtung gegenüber dem Prüftisch geführt sein. Auf dieser Spannbacke kann dann das Felgenhorn der Felge von oben aufliegen. Auf der der erstgenannten Spannbacke abgewandten Seite liegt dann an dem Felgenhorn die andere Spannbacke an. Bilden die Spannbacken eine Art V, wobei die einzelnen Spannbacken jeweils einen Schenkel des V bilden und das Schwenklager im Verbindungsbereich der beiden Schenkel angeordnet ist, ist das von den Schwenkbacken gebildete V liegend angeordnet mit Öffnung des V radial nach innen. Der Eintritt des Felgenhorns zwischen die beiden Spannbacken erfolgt somit, indem die beiden Spannbacken radial nach innen bewegt werden.

Die Kontaktbereiche der Spannelemente mit der Felge können hinsichtlich der Geometrie und des Materials beliebig sein. Vorzugsweise weisen die Spannelemente im Kontaktbereich mit der Felge ein Federelement, insbesondere einen Elastomerkörper auf, womit eine gute Verspannung möglich ist, je nach Wahl der Reibeigenschaften des Kontkatkörpers oder Elastomerkörpers eine gute Fixierung der Felge an dem Prüftisch möglich ist und Beschädigungen der Felge im Kontaktbereich vermieden werden können.

Die Handhabungseinrichtung kann beliebige Freiheitsgrade aufweisen. Für einen besonderen Vorschlag der Erfindung stellt die Handhabungseinrichtung einen vertikalen Verschiebe-Freiheitsgrad zur Verfügung, mittels dessen ein Anheben und/oder ein Absenken des Rads (ggf. mit Anbauteilen) möglich ist. Des Weiteren verfügt die Handhabungseinrichtung über einen Schwenk-Freiheitsgrad um eine vertikale Achse, mittels dessen ein seitliches Verschwenken des Rads (ggf. mit Anbauteilen) von dem Prüftisch weg oder zu diesem möglich ist. Schließlich kann die Handhabungseinrichtung über einen Schwenk-Freiheitsgrad um eine horizontale Achse verfügen, welcher für eine besondere Ausgestaltung von dem Tragarm bereitgestellt wird.

Eine weitere Lösung der der Erfindung zugrundeliegenden Aufgabe ist gegeben durch ein Verfahren zum Betreiben einer Radprüfeinrichtung. Vorgeschlagen wird, dass zunächst ein Handhaben des Rads (und u. U. einer hiermit gebildeten Montageeinheit) durch eine Handhabungseinrichtung erfolgt. Diese Handhabung besteht insbesondere in dem Zuführen des Rads zu einem Prüftisch der Radprüfeinrichtung. Um eine Kalibrierung eines Messsensors der Handhabungseinrichtung vorzunehmen, wird zunächst eine Kalibrierbeanspruchung erzeugt, was durch Ansteuerung eines von der Handhabungseinrichtung ausgebildeten Kalibrieraktuators erfolgen kann, der mit einem Steuersignal (bei welchem es sich auch um ein geregeltes Signal handeln kann) angesteuert wird. Hierbei wird die Handhabungseinrichtung von der mit dem Rad gebildeten Montageeinheit zumindest teilweise gelöst, so dass (bis auf die Wirkung der Kalibrierbeanspruchung) die mit dem Rad gebildeten Montageeinheit nicht mehr an der Handhabungseinrichtung gehalten oder abgestützt ist. Alternativ oder kumulativ kann eine Messung einer erzeugten Kalibrierbeanspruchung des Rads erfolgen, wozu ein Kalibriersensor Einsatz findet, der von der Handhabungseinrichtung ausgebildet ist und ein Kalibrier-Messsignal erzeugt. In dem Verfahren erfolgt dann eine Ermittlung eines Kalibrierfaktors, einer Kalibrierkurve, einer Kalibrierabhängigkeit oder eines Kalibrier-Kennfeldes. Dies erfolgt einerseits auf Grundlage des Steuersignals für die Ansteuerung des Kalibrieraktuators und/oder des Kalibrier-Messsignals des Kalibriersensors. Andererseits erfolgt dies auf Grundlage des Messsignals des Messsensors infolge der Kalibrierbeanspruchung. Ist eine derartige Kalibrierung erfolgt, kann der eigentliche Prüfbetrieb erfolgen. In diesem Prüfbetrieb erfolgt dann die Erzeugung einer dynamischen Prüfbeanspruchung des Rads durch einen Prüfaktuator, welcher gesondert von dem Kalibrieraktuator ausgebildet ist. Hieran anschließend erfolgt die Auswertung des Messsignals des Messsensors infolge der Prüfbeanspruchung, wobei eine Ermittlung der Prüfbeanspruchung aus dem Messsignal unter Berücksichtigung des zuvor in der erläuterten Kalibrierung ermittelten Kalibrierfaktors, der Kalibrierkurve, der Kalibrierabhängigkeit oder des Kalibrier-Kennfeldes erfolgt. Die Durchführung des Verfahrens erfolgt hierbei vorzugsweise durch eine elektronische Steuereinrichtung.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt in einer räumlichen Detaildarstellung eine Radprüfeinrichtung mit an dem Prüftisch verspanntem Rad.
- **Fig. 2**: zeigt die Radprüfeinrichtung gemäß Fig. 1 in einem Teil-Vertikalschnitt.
- **Fig. 3**: zeigt ein Detail III der Radprüfeinrichtung gemäß Fig. 2.
- **Fig. 4**: zeigt ein Detail IV der Radprüfeinrichtung gemäß Fig. 2 im Bereich eines Tragarms einer Handhabungseinrichtung.
- **Fig. 5**: zeigt in einem schematischen Vertikalschnitt ein hydraulisch betätigtes Spannelement.
- **Fig. 6 bis 9**: zeigen unterschiedliche Betriebsstellungen der Radprüfeinrichtung während einer Handhabung eines Rads mit zugeordneter Montageeinheit in einer räumlichen Detaildarstellung.

### FIGURENBESCHREIBUNG

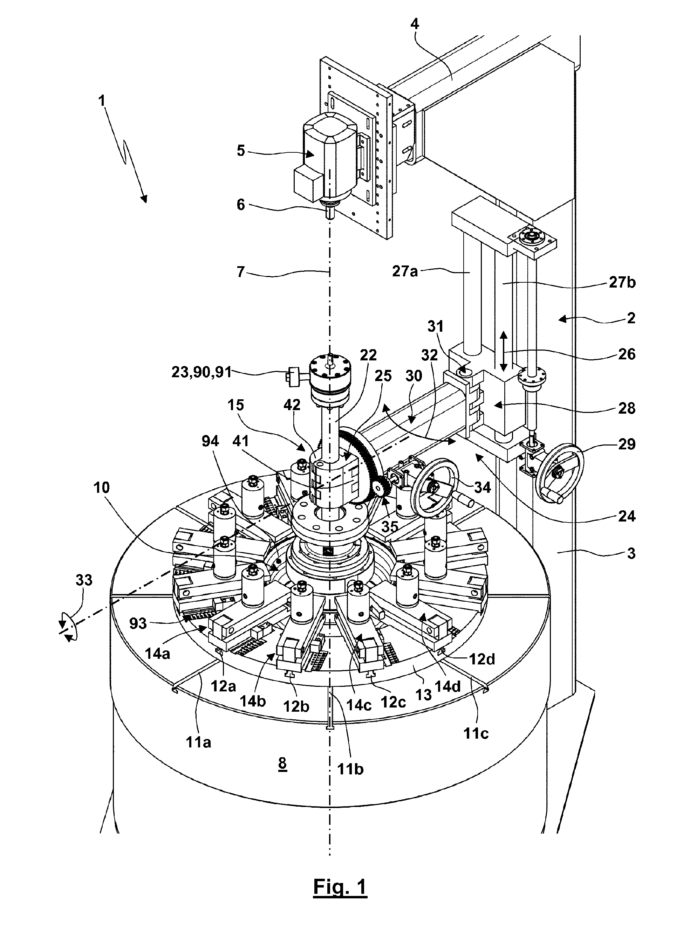

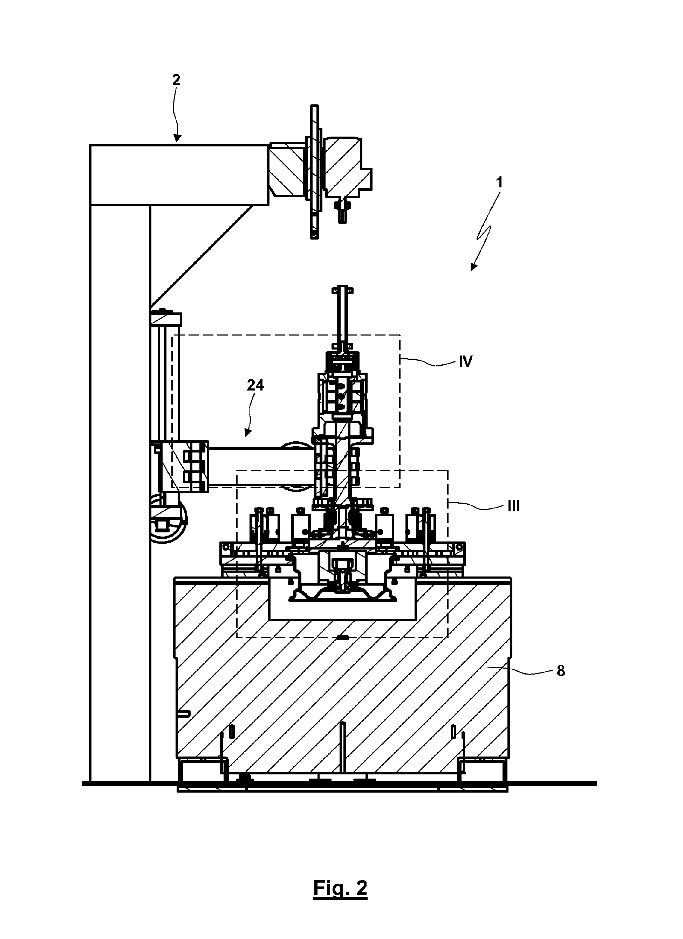

**Fig. 1** **und** **2** zeigen eine Radprüfeinrichtung 1. Diese weist eine Tragstruktur 2 auf, die "galgenartig" ausgebildet ist mit einem Vertikalträger 3 und einem Horizontalträger 4. Der Horizontalträger 4 trägt in dem freien Endbereich einen beispielsweise elektrischen Antriebsmotor 5, dessen Antriebswelle 6 sich vertikal nach unten koaxial zu einer Prüfachse 7 erstreckt.

Die Radprüfeinrichtung 1 weist darüber hinaus einen Prüftisch 8 auf. Der Prüftisch 8 ist in an sich bekannter Weise schwingungsisolierend gegenüber dem Boden gelagert. Auf seiner Oberseite besitzt der Prüftisch 8 eine Ausnehmung 9, welche koaxial zur Prüfachse 7 orientiert ist und in welche teilweise ein Prüfling, hier ein (Fahrzeug-)Rad 10, eintreten kann. Auf der Oberseite weist der Prüftisch 8 hier radial zur Prüfachse 7 orientierte Führungsnuten 11 auf, die gleichmäßig über den Umfang verteilt sind. Unmittelbar in diesen Führungsnuten 11 des Prüftisches 8 oder in entsprechend ausgebildeten und angeordneten Führungsnuten 12 einer Halte- oder Adapterplatte 13 sind Spannelemente 14 zum Einspannen und damit festen Halten einer Felge 94 des Rads 10 an dem Prüftisch 8 geführt und fixiert. Die Halte- oder Adapterplatte 13 kann bspw. die Anpassung an unterschiedliche Typen und Geometrien von Felgen 94 ermöglichen.

Von der derart an dem Prüftisch 8 festgespannten Felge 94 erstreckt sich vertikal und koaxial zur Prüfachse 7 eine Lasteinrichtung 15. In der Lasteinrichtung 15 sind ein Bremsscheibenersatzkörper 16, eine Radnabe 17, ein Wälzkörper 18, ein Lagerkörper 19, eine Verbindungsplatte 20, eine Messeinheit 21 und eine Lastwelle 22 mit einer daran drehfest gehaltenen Unwuchtmasse 23 in mechanischer Reihenschaltung bei koaxialer Anordnung zur Prüfachse 7 drehfest miteinander verbunden. Hierbei ermöglichen die zwischen die Radnabe 17 und den Lagerkörper 19 zwischengeordneten Wälzkörper 18 unter Bildung einer Lagerung mit einem Drehfreiheitsgrad um die Prüfachse 7, dass eine relative Verdrehung der fest eingespannten Felge 94 mit dem Bremsscheibenersatzkörper 16 und der Radnabe 17 einerseits gegenüber dem Lagerkörper 19, der Verbindungsplatte 20, der Messeinheit 21 und der Lastwelle 22 mit der Unwuchtmasse 23 andererseits erfolgen kann. Diese Drehbewegung wird herbeigeführt über den Antriebsmotor 5. Zu diesem Zweck ist die Antriebswelle 6 über eine Kardanwelle mit einem zusätzlichen Längs-Verschiebefreiheitsgrad mit dem oberen Endbereich der Lastwelle 22 drehfest gekoppelt. Durch den Einsatz der Kardanwelle kann von dem Antriebsmotor 5 ein Antriebsmoment auf die Lastwelle 22 übertragen werden, wobei infolge der Kardanwelle keine Aufbringung insbesondere einer Querkraft auf die Lastwelle 22 bei nicht koaxialer Anordnung der Lastwelle 22 zu der Antriebswelle 6 und/oder bei einer Verformung der Lastwelle 22 und/oder des Rads 10 erfolgt.

Die Radprüfeinrichtung 1 verfügt darüber hinaus über eine Handhabungseinrichtung 24. Die Handhabungseinrichtung 24 ist an der Tragstruktur 2 gehalten. Die Handhabungseinrichtung 24 weist in einem Endbereich eine Befestigungseinheit 25 auf, über welche an der Handhabungseinrichtung 24 die Lasteinrichtung 15 mit der daran gehaltenen Felge 94 befestigt werden kann. Hierbei erfolgt die Befestigung der Befestigungseinheit 25 an der Lasteinrichtung 15 ungefähr bei der halben Längserstreckung der Lastwelle 22 durch ein Greifen oder Einspannen der Mantelfläche 43 der Lastwelle 22.

Die Handhabungseinrichtung 24 gewährleistet, dass gegenüber der Tragstruktur 2 die Befestigungseinheit 25 zumindest entlang drei Freiheitsgraden bewegbar ist:
a) Ein vertikaler Freiheitsgrad 26 wird gewährleistet durch zwei vertikal orientierte, an der Tragstruktur 2 gehaltene Führungssäulen 27a, 27b, gegenüber welchen ein Führungsschlitten 28 vertikal verschieblich geführt ist. Hierbei kann ein vertikales Verfahren des Führungsschlittens 28 manuell von einem Benutzer durch Betätigung eines Handrads 29 herbeigeführt werden, dessen Drehbewegung über ein Getriebe wie beispielsweise einen Spindeltrieb umgewandelt wird in eine vertikale Bewegung des Führungsschlittens 28.
b) Der Führungsschlitten 28 und ein Tragarm 30 der Handhabungseinrichtung 24 sind über ein Schwenklager 31 verschwenkbar um eine vertikale Schwenkachse verbunden, womit ein Schwenk-Freiheitsgrad 32 bereitgestellt ist.
c) Schließlich ist der Tragarm 30 in dem dem Führungsschlitten 28 abgewandten Endbereich über einen Schwenk-Freiheitsgrad 33, dessen Schwenkachse koaxial zur Längsachse des Tragarms 30 orientiert ist, mit der Befestigungseinheit 25 verbunden. Eine manuelle Verschwenkung der Befestigungseinheit 25 entlang des Schwenk-Freiheitsgrads 33 gegenüber dem Tragarm 30 kann ebenfalls über die Betätigung eines Handrads 34 erfolgen, dessen Drehbewegung über ein Umlenkgetriebe und/oder Übersetzungsgetriebe 35 auf die Befestigungseinheit 25 übertragen wird.

Für sämtliche genannten Freiheitsgrade kann eine Sicherung einer einmal erreichten Betriebsstellung über zusätzliche, hier nicht im Detail dargestellte Rast-, Verriegelungs- oder anderweitige Sicherungseinrichtungen erfolgen. Alternativ oder kumulativ zu der erläuterten manuell verursachten Bewegung entlang der Freiheitsgrade 26, 32, 33 kann auch eine vom Benutzer veranlasste oder automatische Bewegung entlang zumindest eines Teils der Freiheitsgrade durch einen geeigneten (beispielsweise elektrischen oder hydraulischen, elektronisch gesteuerten) Aktuator erfolgen.

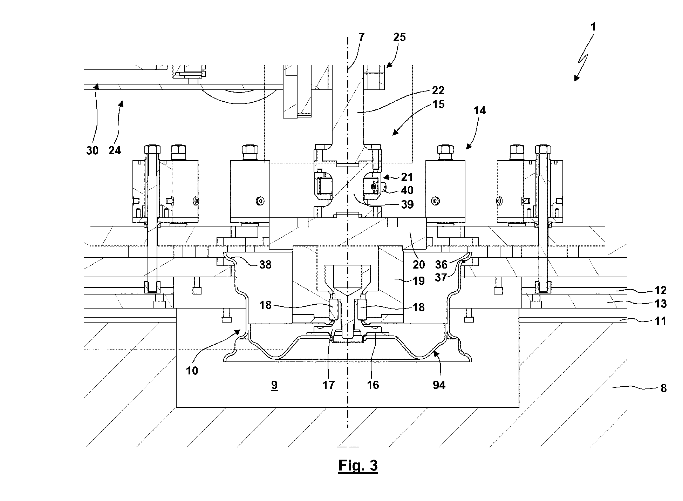

**Fig. 3** zeigt in einem Teil-Vertikalschnitt den Prüftisch 8 mit der Ausnehmung 9. In dieser ist ungefähr mit der Hälfte in Richtung ihrer Längserstreckung die Felge 94 angeordnet. Hierbei bezeichnet die Längsachse der Felge 94 die Rotationsachse der Felge 94 im Fahrbetrieb. Die Längsachse der Felge 94 ist koaxial zur Prüfachse 7 angeordnet. Auf dem Prüftisch 8 ist über eine Verspannung mittels Nutensteinen in den Führungsnuten 11 die Halte- oder Adapterplatte 13 befestigt, welche ringförmig ausgebildet ist mit einer inneren Durchgangsausnehmung, welche die Ausnehmung 9 des Prüftischs 8 nach oben fortsetzt. In den Führungsnuten 12 sind die Spannelemente 14 radial verschieblich geführt und fixierbar. Die Spannelemente 14 bilden jeweils eine obere Spannfläche 36 und eine untere Spannfläche 37 aus, zwischen welchen ein Felgenhorn 38 der Felge 94 verspannt werden kann. Die Spannelemente 14 bilden eine Spanneinrichtung 92. Mittels der Spanneinrichtung 92 kann das Rad 10 über die Felge 94 am Spanntisch 8 fixiert werden.

Im Fahrbetrieb ist die Radnabe 17 über Wälzkörper drehbar an einer lenkbaren oder nicht lenkbaren Achse gelagert. In der Radprüfeinrichtung 1 erfolgt die Lagerung der Radnabe 17 über Wälzkörper 18 an dem Lagerkörper 19, welcher in dem in Fig. 3 dargestellten Vertikalschnitt ungefähr U-förmig ausgebildet ist. Der Grundschenkel des U verfügt über eine Durchgangsbohrung, welche die außenliegende Lagerfläche für die Wälzkörper 18 bildet. Die dem Grundschenkel des U abgewandten Endbereiche der nach oben orientierten Seitenschenkel des U sind flanschartig verbunden mit der Verbindungsplatte 20. Auf der dem Lagerkörper 19 abwandten Seite ist über einen Flansch oder anderweitige Befestigungsmittel eine Messeinheit 21 befestigt, die wiederum auf der der Verbindungsplatte 20 abwandten Seite über einen Flansch oder anderweitige Verbindungsmittel mit der Lastwelle 22 fest verbunden ist. Hierbei kann die Messeinheit 21 auf einem beliebigen Funktionsprinzip basieren, sofern diese ein Biegemoment erfasst, welches um eine Achse wirkt, die vertikal zur Prüfachse 7 orientiert ist. Um lediglich ein Beispiel zu nennen, kann die Messeinheit mit einem Verformungsbereich 39 ausgebildet sein, welcher sich entsprechend dem wirkenden Biegemoment verformt. Die Verformung des Verformungsbereichs 39 kann dann über Dehnungsmessstreifen in geeigneter Schaltungsanordnung erfasst werden. Ein Messsensor 40 der Messeinheit 21 erzeugt ein Messsignal, welches über einen Kalibrierfaktor, eine Kalibrierkurve u. ä. korreliert mit der in dem Verformungsbereich 39 wirkenden Biegebeanspruchung und damit auch korreliert (über einen anderen Kalibrierfaktor oder eine andere Kalibrierkurve) mit der Biegebeanspruchung des Rads 10.

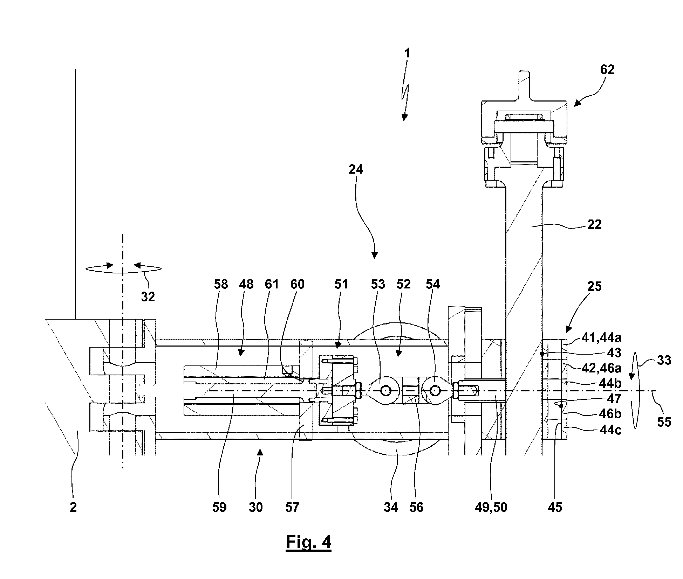

**Fig. 4** zeigt in einem Vertikalschnitt einen mit dem Tragarm 30 gebildeten Teil der Handhabungseinrichtung 24. Das Schwenklager 31 zwischen dem Tragarm 30 und der Tragstruktur 2 ist hierbei gebildet mit fluchtenden Bohrungen der Tragstruktur 2 und des Tragarms 30, durch welche sich ein Schwenkbolzen zur Vorgabe des Schwenk-Freiheitsgrads 32 erstrecken kann.

Wie insbesondere in Fig. 1 und 4 zu erkennen ist, ist die Befestigungseinheit 25 gebildet mit Halteelementen 41, 42, zwischen welchen eine Mantelfläche 43 der Lastwelle 22 verspannt werden kann, wozu die Halteelemente 41, 42 halbzylindrische oder teilzylindrische Durchgangsausnehmungen entsprechend der Mantelfläche 43 der Lastwelle 22 besitzen können. Für das dargestellte Ausführungsbeispiel ist das Halteelement 41 fest mit einem Endbereich des Tragarms 30 verbunden. Das Halteelement 41 erstreckt sich auf einer Seite um die Lastwelle 22 herum. In dem dem Tragarm 30 abgewandten Endbereich verfügt dieses Halteelement 41 über mehrere übereinander liegende Finger 44a, 44b, 44c, welche durchgehende Bohrungen 45 aufweisen. Das andere Halteelement 42 besitzt auf der dem Tragarm 30 abgewandten Seite ebenfalls mehrere Finger 46a, 46b, die welche zwischen den Fingern 44a, 44b, 44c des Halteelements 41 angeordnet sind und über den Bohrungen 45 entsprechende Bohrungen 47 verfügen. Bei koaxialer Ausrichtung der Bohrungen 45, 47 kann sich durch diese ein Schwenkbolzen (nicht dargestellt) erstrecken, womit das verschwenkbare Halteelement 42 verschwenkbar um eine vertikale Achse an dem fest an dem Tragarm 30 gehaltenen Halteelement 41 gelagert ist. In der Schließ-, Spann- oder Haltestellung erstreckt sich das Halteelement 42 auf der dem Halteelement 41 gegenüberliegenden Seite um die Lastwelle 22 herum. Das Halteelement 42 ist über quer zur Zeichenebene gemäß Fig. 4 orientierte, in den Figuren nicht dargestellte Spannschrauben auf der zwischen der Lastwelle 22 und dem Tragarm 30 angeordneten Seite mit dem Halteelement 41 verschraubt, womit die Mantelfläche 43 der Lastwelle 22 zwischen den Halteelementen 41, 42 einspannbar ist.

Des Weiteren ist in Fig. 4 zu erkennen, dass der Tragarm 30 in seinem Inneren einen Kalibrieraktuator 48 aufweist. Über den Kalibrieraktuator 48 kann ein Beanspruchungselement 49, hier ein Stößel 50, gegen die Mantelfläche 43 der Lastwelle 22 gepresst werden. Befindet sich die Mantelfläche 43 zu diesem Zeitpunkt nicht in Kontakt mit den Halteelementen 41, 42 der Befestigungseinheit 25, führt die über den Stößel 50 applizierte Kalibrierkraft zu einer Einleitung einer Querkraft in die Lastwelle 22. Die Kalibrierkraft hat die Erzeugung eines Biegemoments um eine Biegeachse, welche quer zur Zeichenebene gemäß Fig. 4 orientiert ist und mit der Verdrehung der Lastwelle 22 relativ zu der Lastwelle 22 rotiert, zur Folge. Die Biegebeanspruchung wirkt auf die Lastwelle 22, die weiteren Bauelemente der Lasteinrichtung 15 und das Rad 10. Hierbei ist der Betrag der Biegebeanspruchung u. U. abhängig von dem Abstand der Kontaktfläche des Stößels 50 von dem jeweiligen Materialbereich der Komponente vertikal zur Betätigungsrichtung des Stößels 50.

Möglich ist für eine alternative Ausgestaltung auch, dass in geschlossenem Zustand der Befestigungseinheit 25 und während der Handhabung die Lastwelle 22 lediglich lose in der Befestigungseinheit 25 aufgenommen ist. Für diese Ausführungsform kann dann die erforderliche Fixierung der Lastwelle 22 (mit zugeordneten weiteren Bauelementen) in der Befestigungseinheit 25 durch Betätigung des Kalibrieraktuators 48 erfolgen.

Gemäß Fig. 4 ist zwischen das Beanspruchungselement 49 und den Kalibrieraktuator 48 einerseits ein Kalibriersensor 51 in den Kraftfluss zwischengeordnet. Hierbei kann der Kalibriersensor 51 auf einem beliebigen Messprinzip basieren, sofern dieser die in Längsrichtung des Beanspruchungselements 49 wirkende Kalibrierkraft erfasst. Um lediglich einige nicht beschränkende Beispiele zu nennen, kann auch hier der Einsatz von DMS (in beliebiger Schaltungsanordnung) oder der Einsatz eines piezoelektrischen Kraftaufnehmers erfolgen. Der Kalibriersensor 51 erzeugt ein Kalibrier-Messsignal.

Des Weiteren ist in den Kraftfluss zwischen dem Kalibrieraktuator 48 und dem Beanspruchungselement 49 ein Gelenktrieb 52, insbesondere eine Kardanwelle oder ein Z-Gelenktrieb, zwischengeordnet, was hier stromabwärts des Kalibriersensors 51 im Kraftfluss von dem Kalibrieraktuator 48 zu dem Beanspruchungselement 49 erfolgt. Für das dargestellte Ausführungsbeispiel ist der Gelenktrieb 52 mit zwei Augenschrauben 53, 54 gebildet. Die Augenschrauben 53, 54 sind mit einander zugewandten Augen entlang der Längsachse 55 des Tragarms 30 orientiert. Das Gewinde der Augenschraube 53 ist in einen Grundkörper des Kalibriersensors 51 eingeschraubt. Das Gewinde der anderen Augenschraube 54 ist in das Beanspruchungselement 49 eingeschraubt. An den Lageraugen, welche parallel zueinander orientierte und vertikal zur Zeichenebene gemäß Fig. 4 orientierte Schwenkachsen vorgeben, ist gelenkig ein Koppelglied 56 gelagert. Der Gelenktrieb 52 dient der Gewährleistung, dass über den Kalibrieraktuator 48 ausschließlich die genannte Querkraft in die Lastwelle 22 eingeleitet wird.

Für das in Fig. 4 dargestellte Ausführungsbeispiel ist der Kalibrieraktuator 48 als hydraulischer Aktuator ausgebildet. Hierzu ist über einen Tragkörper 57 in einem Innenraum des Tragarms 30 ein Hydraulikzylinder 58 gehalten, in dem ein Kolben 59 in Richtung der Längsachse 55 gleitend unter Abdichtung geführt ist. Die Innenfläche des Hydraulikzylinders 58 und eine Kolbenfläche 60 des Kolbens 59 begrenzen einen hydraulischen Steuerraum 61. Eine Erzeugung eines hydraulischen Druckes in dem Steuerraum 61 bewirkt an der Kolbenfläche 60 eine Beaufschlagungskraft. Der Kolben 59 ist über den Kalibriersensor 51 und den Gelenktrieb 52 mit dem Beanspruchungselement 49 gekoppelt, so dass über den hydraulischen Druck in dem Steuerraum 61 die von dem Beanspruchungselement 49 in die Lastwelle 22 eingeleitete Querkraft gesteuert werden kann. Möglich ist, dass eine Regelung des Kalibrieraktuators 48, hier eine Regelung des Drucks in dem Steuerraum 61, unter Rückführung des Signals des Kalibriersensors 51 erfolgt.

In Fig. 4 ist des Weiteren im oberen Endbereich der Lastwelle 22 die kardanische Anlenkung 62 für ein Koppelelement zwecks drehfester Verbindung mit der Antriebswelle 6 des Antriebsmotors 5 dargestellt.

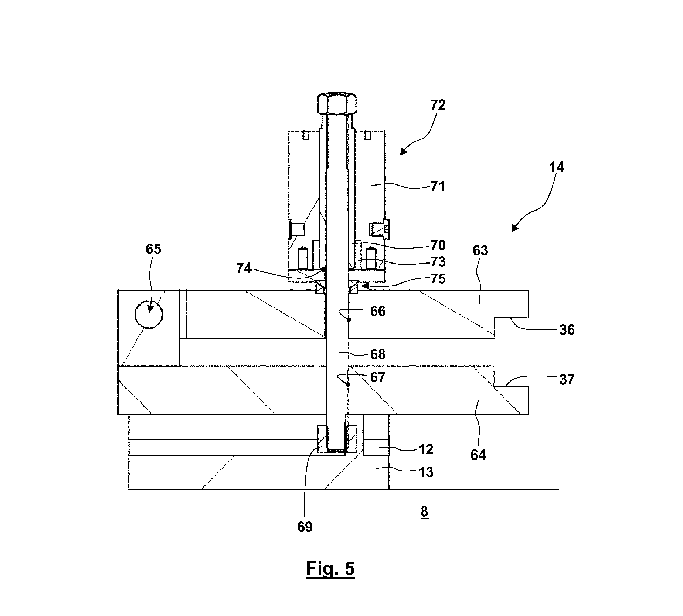

**Fig. 5** zeigt in einem schematisierten Vertikalschnitt ein Spannelement 14. Dieses verfügt über Spannbacken 63, 64. In dem der Felge 94 zugewandten Endbereich bilden die Spannbacken 63, 64 Spannflächen 36, 37 aus, zwischen denen die Felge 94 eingespannt werden kann. Dieses Einspannen kann unmittelbar an den Spannflächen 36, 37 erfolgen. Möglich ist aber auch, dass zwischen die Spannflächen 36, 37 und die Felge 94 jeweils ein Adapterkörper zwischengeordnet ist, welcher eine Anpassung an die konkrete Kontur der Felge 94 ermöglicht. Möglich ist auch, dass die Spannbacken 63, 64 oder die Adapterkörper aus einem elastischen Material, insbesondere einem Elastomermaterial, hergestellt sind oder hiermit beschichtet sind, um eine Anpassung und/oder ein Einspannen ohne Beschädigungen der Felge 94 zu ermöglichen. In den den Spannflächen 36, 37 abgewandten Endbereichen sind die Spannbacken 63, 64 über ein Schwenklager 65 verschwenkbar miteinander verbunden. Beispielsweise kann das Schwenklager 65 mit einem sich durch koaxiale Lagerbohrungen der Spannbacken 63, 64 erstreckenden Schwenkbolzen gebildet sein. Ungefähr mittig zwischen dem Schwenklager 65 und den Spannflächen 36, 37 verfügen die Spannbacken 63, 64 über vertikale fluchtende Bohrungen 66, 67. Durch die Bohrungen 66, 67 erstreckt sich ein Spannbolzen 68. Der Spannbolzen 68 ist in dem unteren Endbereich verschraubt mit einem Nutenstein 69, der in der Führungsnut 12 der Halte- oder Adapterplatte 13 geführt ist. Der andere Endbereich des Spannbolzens 68 ist fest verbunden mit einem Spannkolben 70, welcher verschieblich in einem Gehäuse 71 eines Spannaktuators 72 geführt ist. Zwischen dem Gehäuse 71 und dem Spannkolben 70 ist ein Steuerraum 73 ausgebildet. Ein in dem Steuerraum 73 wirkender fluidischer, insbesondere hydraulischer Druck wirkt auf eine Kolbenfläche 74, womit eine nach oben gerichtete, auf den Spannkolben 68 wirkende Spannkraft erzeugt wird. Die Unterseite des Gehäuses 71 ist über Kugelgelenkscheiben 75 an der Oberseite der Spannbacke 63 abgestützt, während gleichzeitig der Spannbolzen 68 über den Nutenstein 69 und die Halte- oder Adapterplatte 13 an der Unterseite der Spannbacke 64 abgestützt ist. Somit beaufschlagt die mittels des Spannaktuators 72 erzeugte Spannkraft eine Beaufschlagung der beiden Spannbacken 63, 64 in Schließrichtung, womit ein Verspannen der Felge 94 zwischen den Spannflächen 36, 37 in Abhängigkeit des Drucks in dem Steuerraum 73 erfolgen kann. Mittels der Kugelgelenkscheiben 75 kann bewirkt werden, dass bei einer Veränderung des Winkels der Spannbacken 63, 64 lediglich eine in Richtung der Längsachse des Spannbolzens 68 wirkende Spannkraft auf die Spannbacken 63, 64 ausgeübt wird.

Im Folgenden wird ein Verfahren zum Betrieb der Radprüfeinrichtung 1 beschrieben:

In einem Verfahrensschritt 76 erfolgt eine Montage einer Lasteinrichtung 15 mit einer Felge 94 oder einem Rad 10. Hierzu wird die Radnabe 17 mit dem Bremsscheibenersatzkörper 16 an die Felge 94 geschraubt. Danach erfolgt die Montage des Lagerkörpers 19 mit den Wälzkörpern 18 an der Radnabe 17, die Montage der Verbindungsplatte 20 an dem Lagerkörper 19, die Montage der Messeinheit 21 hieran sowie die Montage der Lastwelle 22 an der Messeinheit 21 und der Anbringung der Unwuchtmasse 23, womit eine Montageeinheit 78 gebildet ist. Es versteht sich, dass von den genannten Bauelementen zuvor einzelne Teilbaueinheiten montiert sein können und/oder eine Montage in anderer Reihenfolge erfolgen kann.

In einem Verfahrensschritt 77 erfolgt dann die Bereitstellung der Montageeinheit 78 in unmittelbarer Nachbarschaft des Prüftischs 8 und der Tragstruktur 2, was durch geeignete Transporteinrichtungen erfolgen kann. Für die folgende Beschreibung wird beispielhaft davon ausgegangen, dass diese Bereitstellung mit horizontal orientierter Längsachse der Lastwelle 22 erfolgt.

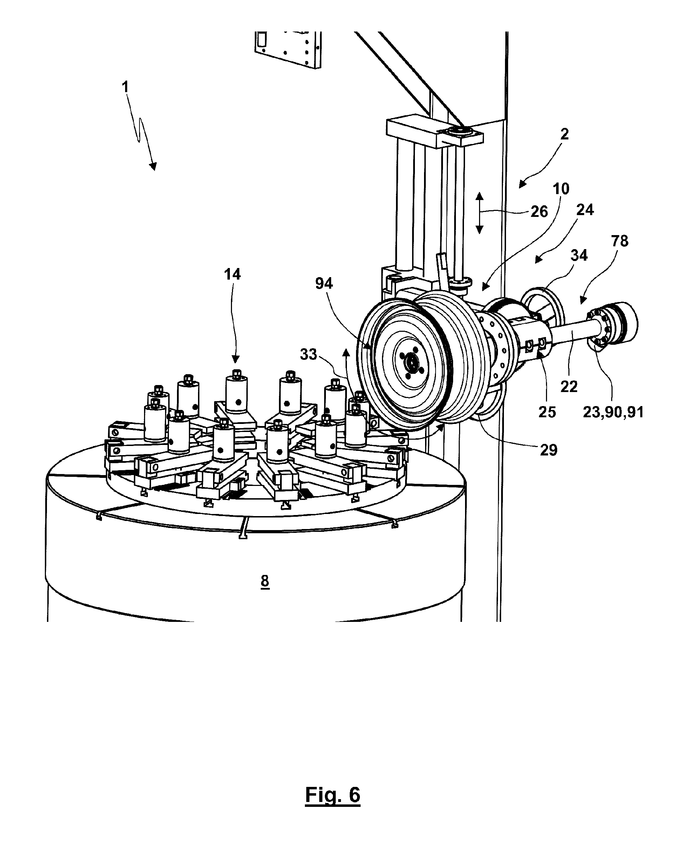

In einem Verfahrensschritt 79 wird dann unter Nutzung der Freiheitsgrade 26, 32, 33 die Befestigungseinheit 25 der Handhabungseinrichtung 24 so positioniert, dass eine Befestigung der Befestigungseinheit 25 und an der Mantelfläche 43 der Lastwelle 22 erfolgen kann. Die beiden Halteelemente 41, 42 werden in ihre Schließstellung verschwenkt und zwischen diesen wird die Lastwelle 22 fest eingespannt (Fig. 6). Somit ist auch bei Entfernung des Transportfahrzeugs die Montageeinheit 78 über die Handhabungseinrichtung 24 an der Tragstruktur 2 gehalten.

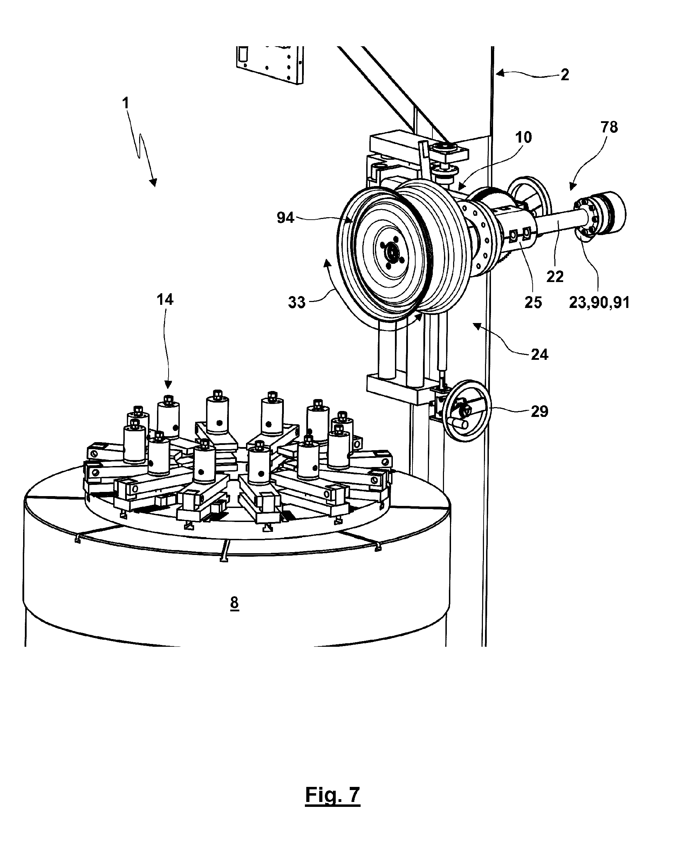

In einem Verfahrensschritt 80 erfolgt ein Anheben der Montageeinheit 78 über die Handhabungseinrichtung 24 unter Nutzung des vertikalen Freiheitsgrads 26, was beispielsweise durch Betätigung des Handrads 29 erfolgen kann (Fig. 7).

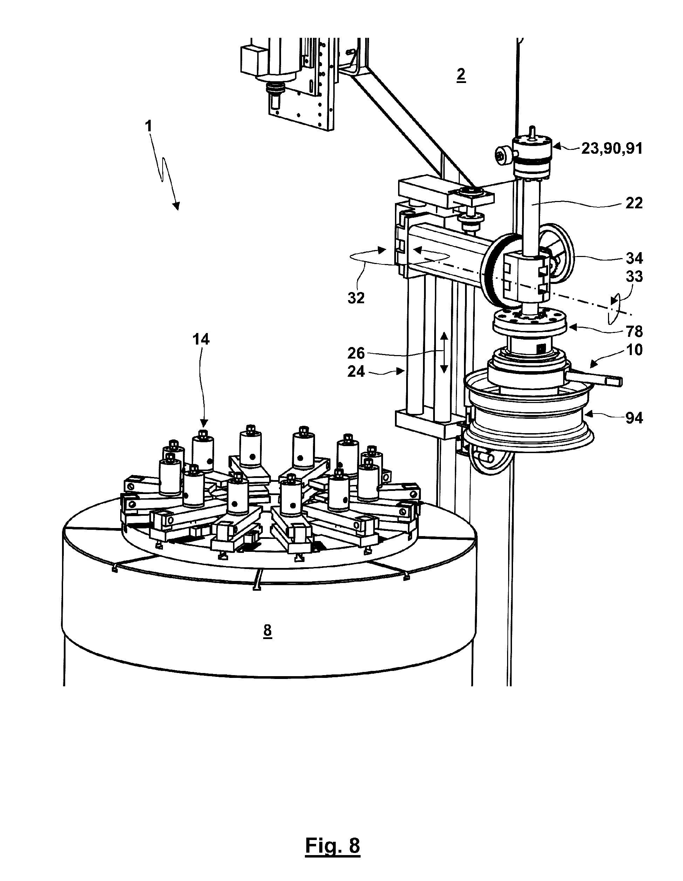

Anschließend erfolgt in einem Verfahrensschritt 81 eine Verschwenkung der Montageeinheit 78 um den Schwenk-Freiheitsgrad 33, bis die Längsachse der Montageeinheit 78 vertikal orientiert ist bei unterhalb der Lastwelle 22 angeordnetem Rad 10 (Fig. 8).

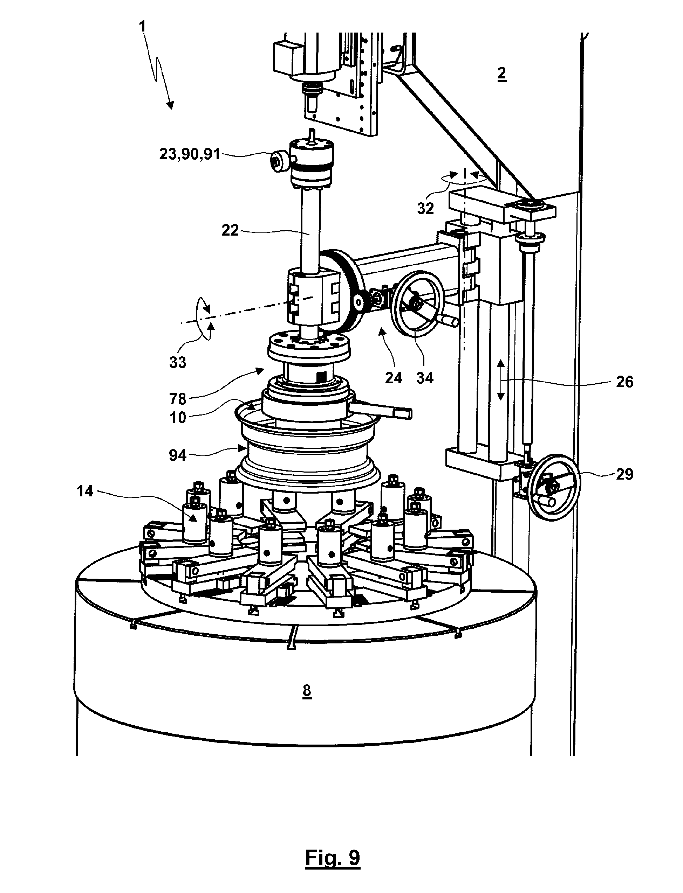

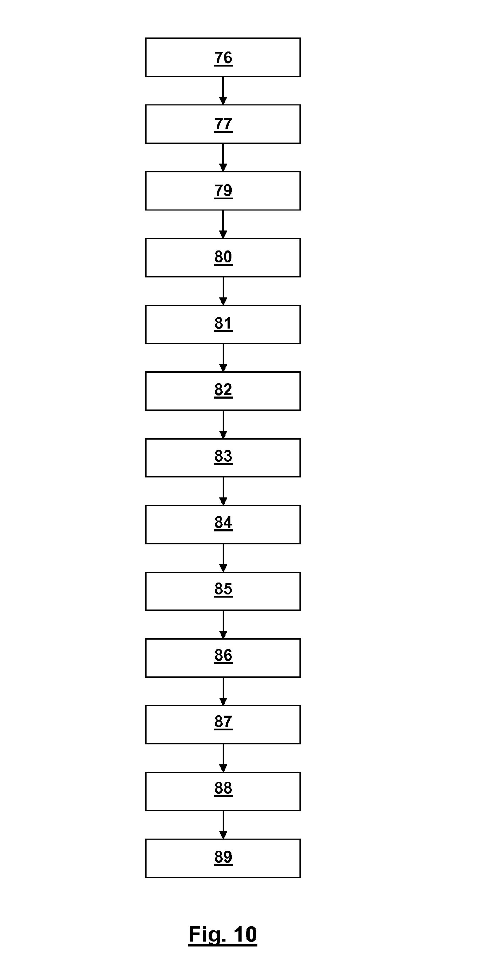

Im Folgenden Verfahrensschritt 82 kann unter Nutzung des Schwenk-Freiheitsgrads 32 und unter Aufrechterhaltung der vertikalen Längsachse der Montageeinheit 78 die Montageeinheit 78 in einer horizontalen Ebene verschwenkt werden, bis sich die Montageeinheit 78 oberhalb der Ausnehmung 9 des Prüftischs 8 befindet (Fig. 9).

Unter Nutzung des vertikalen Freiheitsgrads 26 kann dann ein Absenken der Montageeinheit 78 in einem Verfahrensschritt 83 erfolgen, bis das Rad 10 an ihrem bestimmungsgemäßen Ort in der Ausnehmung 9 angeordnet ist.

In dem hieran anschließenden Verfahrensschritt 84 erfolgt die Betätigung der Spannelemente 14, womit dann die Montageeinheit 78 fest an dem Prüftisch 8 eingespannt ist.

Hieran anschließend erfolgt die Kopplung der Lastwelle 22 über eine geeignete drehfeste, insbesondere kardanische Kopplungseinrichtung mit der Antriebswelle 6 des Antriebsmotors 5 in einem Verfahrensschritt 85.

In einem Verfahrensschritt 86 wird die Befestigungseinheit 25 derart gelöst, dass die Halteelemente 41, 42 keine Abstützkräfte oder Spannkräfte mehr auf die Lastwelle 22 ausüben.

In einem Verfahrensschritt 87 erfolgt dann die Betätigung des Kalibrieraktuators 48 zur Erzeugung einer Kalibrierkraft, welche durch das Beanspruchungselement 49 auf die Lastwelle 22 ausgeübt wird. Dies führt zu einer Biegebeanspruchung der Montageeinheit 78 und insbesondere des Rads 10 und der Felge 94 sowie der Messeinheit 21. Aus einem Vergleich der Ansteuerung des Kalibrieraktuators 48 durch die Steuereinrichtung und/oder des Kalibrier-Messsignals des Kalibriersensors 51 einerseits und des Messsignals des Messsensors 40 der Messeinheit 21 andererseits kann ein geeigneter Kalibrierfaktor ermittelt werden, welcher dann im Folgenden für die Auswertung des Signals des Messsensors 40 der Messeinheit 21 auch im normalen Prüfbetrieb benutzt werden kann.

Ist eine derartige Kalibrierung erfolgt, wird in einem Verfahrensschritt 88 die Handhabungseinrichtung 24 mit den Halteelementen 41, 42 und dem Beanspruchungselement 49 so weit weg von der Lastwelle 22 bewegt, dass auch während des normalen Prüfbetriebs keinerlei Kontakt mit der Lastwelle 22 ausgebildet werden kann.

In einem folgenden Verfahrensschritt 89 kann dann der eigentliche Prüfbetrieb erfolgen, in dem über den Antriebsmotor 5 die Lastwelle 22 in Rotation versetzt wird. Die Massenträgheitskraft der rotierenden Unwuchtmasse 23 erzeugt ein umlaufendes Biegemoment, welches eine Prüfbeanspruchung darstellt. Diese Prüfbeanspruchung in Form einer Biegebeanspruchung wird mittels des Messsensors 40 der Messeinheit 21 erfasst. Auf Grundlage des Messsignals des Messsensors 40 und des zuvor ermittelten Kalibrierfaktors kann dann durch die Steuereinrichtung eine Auswertung der Prüfbeanspruchung erfolgen.

Nach Beendigung der Versuche kann im Wesentlichen in Umkehrung der einzelnen Verfahrensschritte wieder die Montageeinheit 78 von dem Prüftisch 8 entfernt werden und diese dann demontiert oder abtransportiert werden.

Mit der rotierenden Unwuchtmasse 23 ist ein Unwuchterreger 90 gebildet, der einen Prüfaktuator 91 bildet. Der Prüfaktuator 91 dient der Erzeugung einer dynamischen Prüfbeanspruchung des Rads 10, worunter auch eine Erzeugung der Prüfbeanspruchung der Felge 94, der Radnabe 17 und/oder der Lagerung der Radnabe 17 über die Wälzkörper 18 verstanden wird.

In Fig. 1 ist zu erkennen, dass die Spannelemente 14 jeweils über eine Rast- oder Verriegelungseinheit 93 radial zu der Prüfachse 7 rastiert oder verriegelt sind. Hierbei können einzelne Rast- oder Verriegelungsstellungen der Rast- oder Verriegelungseinheit 93 mit unterschiedlichen vorbestimmten Geometrien oder Typen von Fahrzeugrädern 10 oder Felgen 94 korrelieren.

Im Rahmen der Erfindung bezeichnet das "Rad 10" die metallischen Teile des Fahrzeugrads, womit somit nicht ein Reifen umfasst ist. Insbesondere beinhaltet das Rad 10 die Felge 94, eine Bremsscheibe oder einen Bremsscheibenersatzkörper 16, die Radnabe 17, die Wälzkörper 18 und/oder einen Lagerkörper 19. Möglich ist hierbei, dass mittels der Radprüfeinrichtung 1 die vorgenannten Bauelemente des Rads 10 als "Original-Bauelemente", wie diese in dem Fahrzeug eingesetzt werden sollen, verwendet werden, womit dann eine Prüfung dieser Original-Bauelemente erfolgen kann. Möglich ist aber auch, dass lediglich ein derartiges Bauelement oder eine Teilgruppe dieser Bauelemente als Original-Bauelemente ausgebildet sind und somit Gegenstand der Prüfung sind, während andere Bauelemente als die Prüfung ermöglichende Teile ausgebildet sind, welche u. U. auch von der Ausgestaltung der entsprechenden Original-Bauelement abweichen können. Für eine besonderen Vorschlag der Erfindung ist die Radprüfeinrichtung 1 als Felgenprüfeinrichtung ausgebildet, mittels welcher vorrangig die mechanische Prüfung der Felge 94 erfolgt. In diesem Fall kann es sich bei den Bauteilen 16, 17, 18, 19 (ganz oder teilweise) um Original-Fahrzeugteile oder auch abweichende für die Prüfung eingesetzte Teile handeln. Weitere Bestandteile des zu prüfenden Rads 10 können auch weitere, während des Fahrbetriebs des Fahrzeugs auf Umlaufbiegung beanspruchte Bauelemente, wie beispielsweise die Bremsscheibe selbst, Mitnehmerbleche, ein Zweimassenschwungrad u. ä. sein, welche dann Bestandteil des Rads 10 sind, welches in die Radprüfeinrichtung 1 eingespannt wird und mit dieser geprüft wird.

### BEZUGSZEICHENLISTE

- 1: Radprüfeinrichtung
- 2: Tragstruktur
- 3: Vertikalträger
- 4: Horizontalträger
- 5: Antriebsmotor
- 6: Antriebswelle
- 7: Prüfachse
- 8: Prüftisch
- 9: Ausnehmung
- 10: Rad
- 11: Führungsnut
- 12: Führungsnut
- 13: Halte- oder Adapterplatte
- 14: Spannelement
- 15: Lasteinrichtung
- 16: Bremsscheibenersatzkörper
- 17: Radnabe
- 18: Wälzkörper
- 19: Lagerkörper
- 20: Verbindungsplatte
- 21: Messeinheit
- 22: Lastwelle
- 23: Unwuchtmasse
- 24: Handhabungseinrichtung
- 25: Befestigungseinheit
- 26: Vertikaler Freiheitsgrad
- 27: Führungssäule
- 28: Führungsschlitten
- 29: Handrad
- 30: Tragarm
- 31: Schwenklager
- 32: Schwenk-Freiheitsgrad
- 33: Schwenk-Freiheitsgrad
- 34: Handrad
- 35: Umlenkgetriebe, Übersetzungsgetriebe
- 36: Spannfläche
- 37: Spannfläche
- 38: Felgenhorn
- 39: Verformungsbereich
- 40: Messsensor
- 41: Halteelement
- 42: Halteelement
- 43: Mantelfläche
- 44: Finger
- 45: Bohrung
- 46: Finger
- 47: Bohrung
- 48: Kalibrieraktuator
- 49: Beanspruchungselement
- 50: Stößel
- 51: Kalibriersensor
- 52: Gelenktrieb
- 53: Augenschraube
- 54: Augenschraube
- 55: Längsachse
- 56: Koppelglied
- 57: Tragkörper
- 58: Hydraulikzylinder
- 59: Kolben
- 60: Kolbenfläche
- 61: Steuerraum
- 62: Anlenkung
- 63: Spannbacke
- 64: Spannbacke
- 65: Schwenklager
- 66: Bohrung
- 67: Bohrung
- 68: Spannbolzen
- 69: Nutenstein
- 70: Spannkolben
- 71: Gehäuse
- 72: Spannaktuator
- 73: Steuerraum
- 74: Kolbenfläche
- 75: Kugelgelenkscheiben
- 76: Verfahrensschritt
- 77: Verfahrensschritt
- 78: Montageeinheit
- 79: Verfahrensschritt
- 80: Verfahrensschritt
- 81: Verfahrensschritt
- 82: Verfahrensschritt
- 83: Verfahrensschritt
- 84: Verfahrensschritt
- 85: Verfahrensschritt
- 86: Verfahrensschritt
- 87: Verfahrensschritt
- 88: Verfahrensschritt
- 89: Verfahrensschritt
- 90: Unwuchterreger
- 91: Prüfaktuator
- 92: Spanneinrichtung
- 93: Rast- oder Verriegelungseinheit
- 94: Felge

## Patentansprüche

1. Radprüfeinrichtung (1) mit
a) einem Prüftisch (8), an welchem ein Rad (10) befestigt werden kann,
b) einem Prüfaktuator (91) zur Erzeugung einer dynamischen Prüfbeanspruchung des Rads (10),
c) einer Handhabungseinrichtung (24) zum Zuführen des Rads (10) zu und/oder Entfernen des Rads (10) von dem Prüftisch (8) und
d) einem Messsensor (40) zur Erfassung der Prüfbeanspruchung des Rads (10),
**dadurch gekennzeichnet, dass**
e) die Handhabungseinrichtung (24) einen Kalibrieraktuator (48), welcher eine Kalibrierbeanspruchung des Rads (10) erzeugen kann, und/oder einen Kalibriersensor (51), welcher eine Kalibrierbeanspruchung des Rads (10) mit einem Kalibrier-Messsignal messen kann, aufweist und
f) eine Steuereinrichtung vorhanden, welche auf Grundlage
fa) der von der Steuereinrichtung ausgesteuerten Kalibrierbeanspruchung durch den Kalibrieraktuator (48) und/oder des Kalibrier-Messsignals des Kalibiersensors (51) und
fb) eines Messsignals des Messsensors (40) infolge der Kalibrierbeanspruchung eine Kalibrierung des Messsensors (40) vornimmt.

2. Radprüfeinrichtung (1) nach Anspruch 1, **dadurch gekennzeichnet, dass** die Steuereinrichtung zur Kalibrierung des Messsignals auch eine Umrechnungsvorschrift berücksichtigt.

3. Radprüfeinrichtung (1) nach Anspruch 1 oder 2, **dadurch gekennzeichnet, dass** der Kalibrieraktuator (48) und/oder der Kalibriersensor (51) Bestandteil eines Tragarms (30) der Handhabungseinrichtung (24) sind/ist.

4. Radprüfeinrichtung (1) nach Anspruch 3, **dadurch gekennzeichnet, dass** der Tragarm (30) einen Schwenk-Freiheitsgrad (33) der Handhabungseinrichtung (24) um eine horizontale Achse bereitstellt.

5. Radprüfeinrichtung (1) nach einem der vorhergehenden Ansprüche, **dadurch gekennzeichnet, dass** eine Kopplungseinrichtung vorhanden ist,
a) über welche der Prüfaktuator (91) mit dem Rad (10) gekoppelt ist und
b) mit welcher die Handhabungseinrichtung (24) koppelbar ist.

6. Radprüfeinrichtung (1) nach Anspruch 5, **dadurch gekennzeichnet, dass** der Prüfaktuator (91) als Unwuchterreger (90) ausgebildet ist und die Kopplungseinrichung als Lastwelle (22) ausgebildet ist, von deren Längserstreckung zwischen dem Unwuchterreger (90) und dem Rad (10) ein als Prüfbeanspruchung auf das Rad (10) wirkendes umlaufenden Biegemoment abhängig ist.

7. Radprüfeinrichtung (1) nach Anspruch 6, **dadurch gekennzeichnet, dass** der Unwuchterreger (90) und die Lastwelle (22) bei an dem Prüftisch (8) gehaltenem Rad (10) oberhalb des Rads (10) angeordnet sind.

8. Radprüfeinrichtung (1) nach Anspruch 7, **dadurch gekennzeichnet, dass** bei an dem Prüftisch (8) gehaltenem Rad (10) eine Innenseite des Rads (10) nach oben weist.

9. Radprüfeinrichtung (1) nach einem der vorhergehenden Ansprüche, **dadurch gekennzeichnet, dass** eine Spanneinrichtung (92) mit mehreren Spannelementen (14) vorhanden ist und eine Felge (94) des Rads (10) über die Spannelemente (14) an über den Umfang der Felge (94) verteilten Orten an dem Prüftisch (8) gehalten werden kann.

10. Radprüfeinrichtung (1) nach Anspruch 9, **dadurch gekennzeichnet, dass** die Spannelemente (14) der Spanneinrichtung (92) gemeinsam betätigbar sind.

11. Radprüfeinrichtung (1) nach Anspruch 9 oder 10, **dadurch gekennzeichnet, dass** die Positionen der Spannelemente (14) der Spanneinrichtung (92) derart einstellbar sind, dass mit den Spannelementen (14) Felgen (94) unterschiedlicher Abmessungen und/oder Durchmesser an dem Prüftisch (8) gehalten werden können.

12. Radprüfeinrichtung (1) nach Anspruch 11, **dadurch gekennzeichnet, dass** Positionen der Spannelemente (14) der Spanneinrichtung (92) verrastbar oder verriegelbar sind.

13. Radprüfeinrichtung (1) nach einem der Ansprüche 9 bis 12, **dadurch gekennzeichnet, dass**
a) die Spannelemente (14) jeweils mit zwei Spannbacken (63, 64) ausgebildet sind,
b) die Spannbacken (63, 64) in Ihren Endbereichen über ein Schwenklager (65) miteinander verbunden sind und
c) zwischen den Spannbacken (63, 64) unter Veränderung des Öffnungswinkels der Spannbacken (63, 64) eine Felge (10) einspannbar ist.

14. Radprüfeinrichtung (1) nach einem der Ansprüche 9 bis 13, **dadurch gekennzeichnet**, die Spannelemente (14) im Kontaktbereich mit der Felge (94) einen federnd abgestützten Kontaktkörper oder einen Elastomerkörper oder eine elastomere Beschichtung aufweisen.

15. Radprüfeinrichtung (1) nach einem der vorhergehenden Ansprüche, **dadurch gekennzeichnet, dass** die Handhabungseinrichtung (24) über
a) einen vertikalen Verschiebe-Freiheitsgrad (26),
b) einen Schwenk-Freiheitsgrad (32) um eine vertikale Achse und/oder
c) einen Schwenk-Freiheitsgrad (33) um eine horizontale Achse
verfügt.

16. Verfahren zum Betreiben einer Radprüfeinrichtung (1), insbesondere einer Radprüfeinrichtung nach einem der vorhergehenden Ansprüche, mit folgenden Verfahrensschritten:
a) Handhaben des Rads (10) durch eine Handhabungseinrichtung (24),
b) Erzeugen einer Kalibrierbeanspruchung durch Ansteuerung eines von der Handhabungseinrichtung (24) ausgebildeten Kalibrieraktuators (48) mit einem Steuersignal und/oder Messen einer Kalibrierbeanspruchung des Rads (10) durch einen von der Handhabungseinrichtung (24) ausgebildeten Kalibriersensor (51), der ein Kalibrier-Messsignal erzeugt,
c) Ermittlung eines Kalibrierfaktors, einer Kalibrierkurve, einer Kalibrierabhängigkeit oder eines Kalibrier-Kennfeldes auf Grundlage
ca) des Steuersignals für die Ansteuerung des Kalibrieraktuators (48) und/oder des Kalibrier-Messsignals des Kalibiersensors (51) und
cb) eines Messsignals des Messsensors (40) infolge der Kalibrierbeanspruchung
d) Erzeugung einer dynamischen Prüfbeanspruchung des Rads (10) durch einen Prüfaktuator (91),
e) Auswerten des Messsignals des Messsensors (40) infolge der Prüfbeanspruchung,
f) Ermittlung der Prüfbeanspruchung aus dem Messsignal unter Berücksichtigung des Kalibrierfaktors, der Kalibrierkurve, der Kalibrierabhängigkeit oder des Kalibrier-Kennfeldes.
